# EUROPÄISCHE PATENTANMELDUNG

(11) **EP 0 668 401 A1**
(43) Veröffentlichungstag der Anmeldung: **23.08.1995**
(21) Anmeldenummer: 95102278.9
(22) Anmeldetag: 17.02.1995
(51) Int. Cl.: E01H 1/08, A47L 9/00, A01G 1/12

(54) **Kehrgerät**

(30) Priorität: 29.12.1994 DE 4447158; 18.02.1994 DE 4405219
(71) Anmelder: Wiedenmann GmbH, D-89192 Rammingen Krs. Ulm (DE)
(72) Erfinder:
(74) Vertreter: Flügel, Otto, Dipl.-Ing.

(57) **Zusammenfassung**

Die Erfindung betrifft ein Kehrgerät, vorzugsweise als Anbauaggregat für Fahrzeuge, insbesondere Schlepper, Traktoren oder dergleichen, mit zumindest einer rotierend angetriebenen Kehrwalze (6), welche aufgenommenes Kehrgut, beispielsweise feuchtes Laub, Gräser, beziehungsweise sonstige Pflanzenteile oder andere Verunreinigungen in einen Förderkanal (4) fördert, der an seinem der Kehrwalze (6) gegenüberliegenden Ende mit einer Aufnahmevorrichtung, vorzugsweise einem Sammelbehälter (5) verbunden ist, mit einem Gebläse (17), welches einen Unterdruck im Förderkanal (4) erzeugt, um das von der Kehrwalze (6) in den Förderkanal (4) geförderte Kehrgut anzusaugen und in die Aufnahmevorrichtung zu fördern. Ein derartiges Kehrgerät, bei dem die Verstopfungsneigung innerhalb des Förderkanals (4) wesentlich verringert wird, so daß über eine längere Einsatzzeit eine zufriedenstellende Arbeitsweise des Kehrgerätes ohne aufwendige Reinigungsarbeiten gewährleistet ist wird dadurch geschaffen, daß der Förderkanal (4) zumindest in seinem im Bereich eines der Kehrwalze (6) aufweisenden Kehrkopfes (3) angeordneteten Abschnitt einen im wesentlichen parallel verlaufenden Luftnebenkanal (21) hat, über den mittels des Gebläses (17) Luft ansaugbar ist, die im wesentlichen frei von Kehrgut und anderen Verunreinigungen ist.

## Beschreibung

Die Erfindung betrifft ein Kehrgerät, vorzugsweise als Anbauaggregat für Fahrzeuge, insbesondere Schlepper, Traktoren oder dgl., mit zumindest einer rotierend angetriebenen Kehrwalze, welche aufgenommenes Kehrgut, bspw. feuchtes Laub, Gräser, bzw. sonstige Pflanzenteile oder andere Verunreinigungen in einen Förderkanal fördert, der an seinem der Kehrwalze gegenüberliegenden Ende mit einer Aufnahmevorrichtung, vorzugsweise einem Sammelbehälter verbunden ist, mit einem Gebläse, welches einen Unterdruck im Förderkanal erzeugt, um das von der Kehrwalze in den Förderkanal geförderte Kehrgut anzusaugen und in die Aufnahmevorrichtung zu fördern.

Derartige Kehraggregate sind aus dem Stand der Technik bekannt. Sie werden bspw. von Kommunen oder kommunalen Verbänden zur Reinigung von befestigten Flächen, wie bspw. Straßen, Gehsteigen oder dgl. eingesetzt. Hierzu weisen die Kehraggregate zumindest eine rotierend angetriebene Kehrwalze auf, die entweder über ihren gesamten Umfang mit Borsten besetzt ist, oder nur an bestimmten Stellen ihres Walzenkörpers Borstenanordnungen aufweist, wobei diese Borstenanordnungen vorzugsweise diametral gegenüberliegend angeordnet sind.

Hierbei werden bspw. Kehrwalzen verwendet, die insgesamt vier auf ihrem Walzenkörperumfang angeordnete Borstenanordnungen tragen. Darüberhinaus sind aber auch Kehraggregate vorbekannt, die mit Mäh- oder anderen Bodenbearbeitungsaggregaten zusammenwirken und bspw. frisch geschnittenes Gras mittels einer Kehrwalze oder einer anderen Kehreinrichtung aufnehmen und über einen Förderkanal in einen Sammelbehälter fördern. Derartige Kehrgeräte werden sowohl für das Aufnehmen von feuchtem wie auch trockenem Kehrgut verwendet.

Das von der Kehrwalze aufgenommene Kehrgut wird durch die Rotation der Kehrwalze in einen Förderkanal gefördert, der mit seinem der Kehrwalze gegenüberliegenden Ende an eine Aufnahmevorrichtung angeschlossen ist. In diesem Förderkanal wird mittels eines Gebläses ein Unterdruck erzeugt, der das in den Förderkanal geförderte Kehrgut ansaugt. Hierzu ist das Gebläse bspw. im Bereich der Aufnahmevorrichtung angeordnet, wobei das Gebläse gegenüber den Fördereinrichtungen mittels Filteranordnungen abgeschottet ist. Das aufgenommene Kehrgut wird demzufolge durch den Unterdruck innerhalb des Förderkanals bis in die Aufnahmevorrichtung gefördert.

Hierbei hat es sich jedoch erwiesen, daß der zur Kehrwalze offene Förderkanal nicht vollständig gerade ausgebildet werden kann, so daß der Förderkanal insbesondere im Bereich eines Kehrkopfes Rohrabschnitte aufweist, die eine bestimmte Krümmung haben. In diesen Krümmungen sammelt sich insbesondere feuchtes Kehrgut, wie bspw. frisch geschnittene Gräser, welches an der Innenwandung des Förderkanals anhaftet. Hierdurch kann es zu Verstopfungen des Förderkanals kommen. In der Regel ist es dann notwendig, den Förderkanal zu demontieren und zu reinigen. Mit sich verengendem Querschnitt wird nämlich die Saugluft, welche durch das Gebläse erzeugt wird, abgeschnitten, so daß die Verstopfungen steil ansteigen und schnell vollständig werden.

Ausgehend von diesem Stand der Technik ist es Aufgabe der Erfindung, ein Kehrgerät zu schaffen, bei dem die Verstopfungsneigung innerhalb des Förderkanals wesentlich verringert wird, so daß über eine längere Einsatzzeit eine zufriedenstellende Arbeitsweise des Kehrgerätes ohne aufwendige Reinigungsarbeiten gewährleistet ist.

Die Lösung dieser Aufgabenstellung sieht bei einem gattungsgemäßen Kehrgerät vor, daß der Förderkanal zumindest in seinem im Bereich eines die Kehrwalze aufweisenden Kehrkopfes angeordneten Abschnitt einen im wesentlichen parallel verlaufenden Luftnebenkanal hat, über den mittels des Gebläses Luft ansaugbar ist, die im wesentlichen frei von Kehrgut und anderen Verunreinigungen ist.

Vorteil dieses Luftnebenkanals ist, daß immer ein von dem aufgenommenem Gut freier Luftweg bzw. eine entsprechend freie Luftströmung vorhanden bleibt, die bei anhaftendem Kehrgut für einen kontinuierlichen Luftstrom sorgt, mit dem das anhaftende Kehrgut gelöst und in die Aufnahmevorrichtung gefördert wird. Die freie Luftströmung, welche durch den Luftnebenkanal strömt, führt demzufolge dazu, daß anhaftendes Kehrgut durch die kontinuierliche Nebenluft, welche mit hoher Geschwindigkeit strömt, von der Innenwandung des Förderkanals gelöst und mitgerissen wird.

Vorzugsweise erfolgt die Trennung des Förderkanals im Bereich des Kehrkopfes in einen Saugkanal und den Luftnebenkanal durch ein Leitblech. Dieses Leitblech ist nach einem weiteren Merkmal der Erfindung verschwenkbar im Kehrkopf angeordnet, so daß die Eingangsquerschnittsfläche des Saugkanals in Abhängigkeit von den Anforderungen an das Kehrgerät einstellbar ist. Diese Ausbildung hat insbesondere bei Verwendung einer langsam und damit mit geringerer Leistung anzutreibenden, ringsherum mit Borsten versehenen Kehrwalze Vorteile, da der Aufnahmespalt zwischen dem Leitblech und der Kehrwalze in Abhängigkeit des aufzunehmenden Kehrgutes anpassbar ist. Es ist aber auch denkbar, die Kehrwalze als schnell umlaufende Streifenbürste auszuführen, wodurch ein höherer Leistungsbedarf entsteht. Mit einer derartigen Streifenbürste ist es aufgrund eines größeren frei bleibenden Spaltes zwischen dem Leitblech und der Kehrwalze möglich, auch großvolumigeres Fördergut aufzunehmen und in den Saugluftstrom des Gebläses zu überführen.

Nach einem weiteren Merkmal der Erfindung ist vorgesehen, daß durch die Veränderung der Eingangsquerschnittsfläche des Saugkanals eine Veränderung der Eingangsquerschnittsfläche des Luftnebenkanals erfolgt. Hieraus ergibt sich, daß bspw. durch die Verstellung des Leitblechs gleichzeitig die Eingangsquerschnittsfläche des Saugkanals vergrößert und die Eingangsquerschnittsfläche des Luftnebenkanals verringert wird. Entsprechendes gilt selbstverständlich für eine Vergrößerung der Eingangsquerschnittsfläche des Luftnebenkanals mit gleichzeitig einhergehender Verkleinerung der Eingangsquerschnittsfläche des Saugkanals.

Es ist ferner vorgesehen, daß der Querschnitt des Luftnebenkanals zumindest ausgangsseitig im Bereich des Übergangs in den Förderkanal einstellbar ist. Hierzu ist nach einem weiteren Merkmal der Erfindung vorgesehen, daß der Querschnitt des Luftnebenkanals mit einem Schieber oder dgl. variierbar ist. Durch diese Ausgestaltung kann insbesondere die Strömungsgeschwindigkeit des über den Luftnebenkanal angesaugten Luftstroms eingestellt werden, um insbesondere mit großer Haftkraft anhaftendes Kehrgut von den Innenwandungen des Förderkanals zu lösen.

Der Luftnebenkanal mündet vorzugsweise in Fahrtrichtung bei Arbeitsstellung vor der Kehrwalze, wodurch bspw. aufgewirbelter Staub abgesaugt werden kann, der keine negative Auswirkung auf die Wirkungsweise des durch den Luftnebenkanal angesaugten Luftstroms hat. Es ist nach einem weiteren Merkmal der Erfindung vorgesehen, daß vor der Kehrwalze zumindest ein Seitenbesen angeordnet ist und daß der Luftnebenkanal zwischen Kehrwalze und Drehachse des Seitenbesens mündet. Derartige Seitenbesen sind vorzugsweise als in einer horizontalen Ebene verschwenkbare Tellerbürsten ausgebildet, die den Randbereich neben der Kehrwalze reinigen und das dort aufgenommene Kehrgut in den Aufnahmebereich der Kehrwalze fördern, von wo aus das Kehrgut in den Förderkanal gelangt.

Nach einem weiteren Merkmal der Erfindung ist vorgesehen, daß das Gebläse zwischen Kehrkopf und Aufnahmevorrichtung angeordnet ist. Die Aufnahmevorrichtung weist hierbei vorzugsweise Filter auf, so daß erkennbar ist, daß die staubhaltige Luft durch das Gebläse geführt ist. Im Vergleich dazu ist das Gebläse bei aus dem Stand der Technik bekannten Kehrgeräten hinter Filtern angeordnet. Bei solchen hinter den Filtern angeordneten Sauggebläsen handelt es sich um schnellaufende, sehr leistungsstarke Gebläse mit sehr geringem Abstand zwischen den Gebläseschaufeln und der Gebläsewandung. Diese Ausbildung eignet sich jedoch zum einen nicht dazu, Schmutz durch das Gebläse zu führen, zum anderen werden erhebliche Leistungen erforderlich. Der bei der vorliegenden Erfindung im Vordergrund stehende Anwendungsbereich ist jedoch der Betrieb im Zusammenhang mit Kleintraktoren oder Kleinschleppern, die eine entsprechend geringe Leistung haben, so daß die aus dem Stand der Technik bekannten Kehrgeräte mit der für das Gebläse erforderlichen hohen Leistung nicht als Anbauaggregate oder als zu schleppende, in Form eines Anhängers ausgebildete Aggregate verwendbar sind. Daher ist es bei der vorliegenden Erfindung vorteilhaft, daß die vom Gebläse angesaugte, mit Kehrgut belastete Luft durch das Gebläse geführt wird. Hierzu ist eine wesentlich geringere Leistung erforderlich, als es bei den aus dem Stand der Technik vorbekannten Kehrgeräten der Fall ist. Demzufolge ist es ein weiteres Merkmal der Erfindung, daß dem Gebläse Filter nach- und der Aufnahmevorrichtung vorgeschaltet sind, so daß eine Trennung des angesaugten Kehrgutes vor Eintritt in die Aufnahmevorrichtung vorgenommen werden kann.

Weitere Merkmale und Vorteile des erfindungsgemäßen Kehrgerätes ergeben sich aus der nachfolgenden Beschreibung der zugehörigen Zeichnung, in der bevorzugte Ausführungsbeispiele des erfindungsgemäßen Kehrgerätes dargestellt sind. In der Zeichnung zeigen:
Figur 1 eine schematisch dargestellte Seitenansicht eines Kehrgeräts;
Figur 2 eine erste Draufsicht auf eine Zwischenachs-Kehreinrichtung für einen Traktor;
Figur 3 eine zweite Draufsicht auf die Zwischenachs-Kehreinrichtung für einen Traktor gemäß Figur 2;
Figur 4 eine schematische Draufsicht auf einen Teil der Zwischenachs-Kehreinrichtung für einen Traktor gemäß den Figuren 2 und 3;
Figur 5 eine erste Ausführungsform eines erfindungsgemäßen Kehrgerätes mit einem Traktor in Draufsicht;
Figur 6 eine zweite Ausführungsform des erfindungsgemäßen Kehrgeräts mit einem Traktor in einer Draufsicht;
Figur 7 eine dritte Ausführungsform des erfindungsgemäßen Kehrgeräts mit einem Traktor in einer Draufsicht und
Figur 8 eine vierte Ausführungsform des erfindungsgemäßen Kehrgeräts mit einem Traktor in einer Draufsicht.

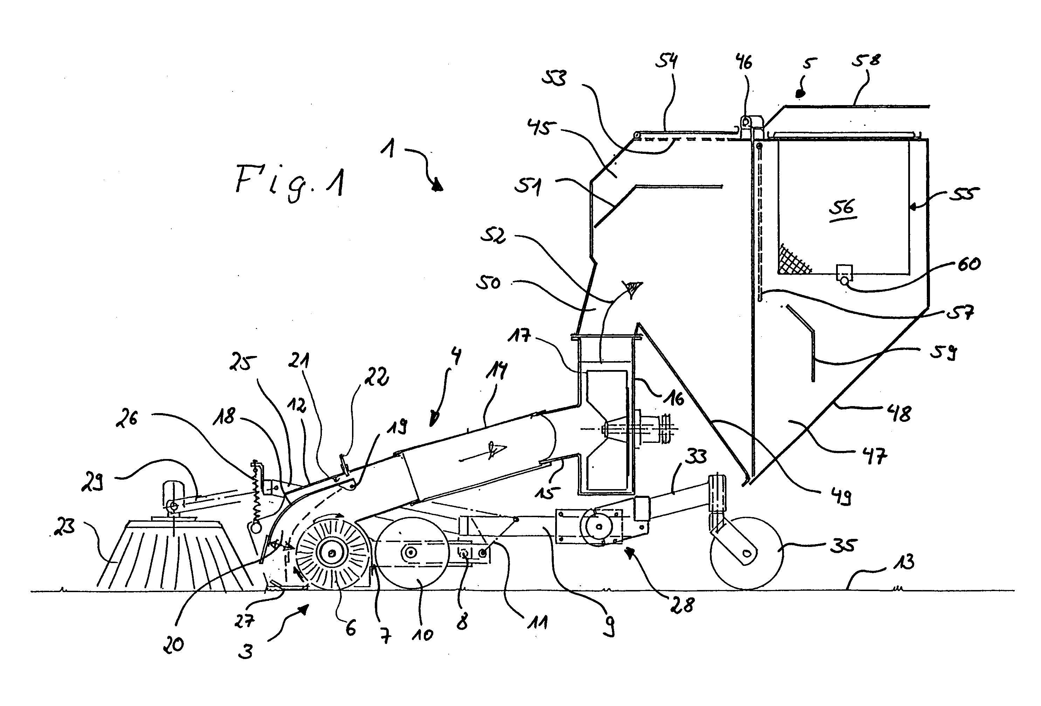

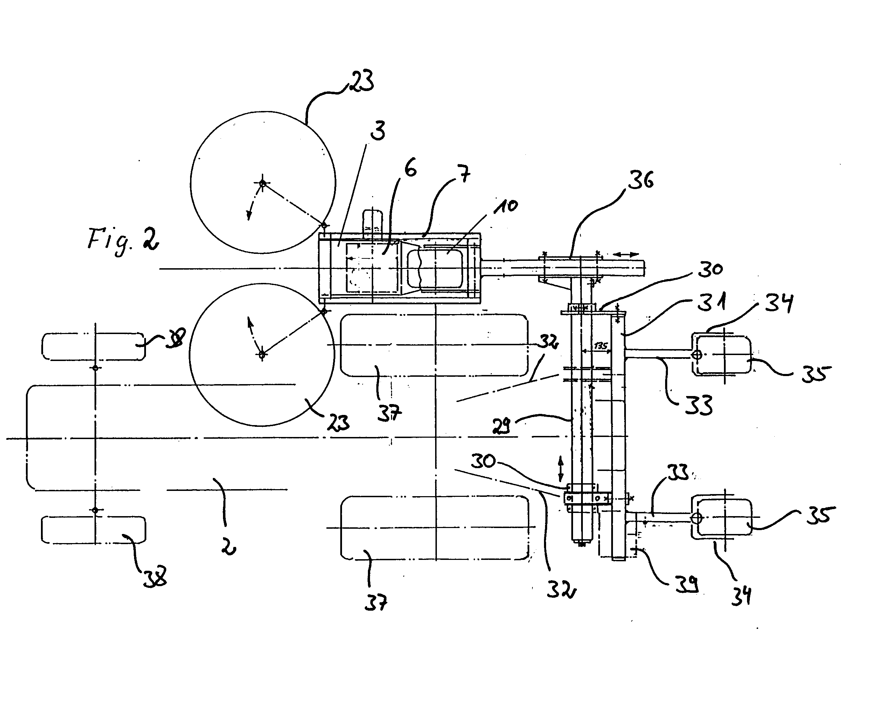

In der Figur 1 ist ein Kehrgerät 1 in einer schematischen Seitenansicht dargestellt. Das Kehrgerät ist als Anbauaggregat für einen Traktor 2 (Figur 2) ausgebildet und besteht aus einem Kehrkopf 3, einem Förderkanal 4 und einer als Sammelbehälter 5 ausgebildeten Aufnahmevorrichtung. Diese Bauteile werden im Nachfolgenden noch genauer beschrieben.

Der Kehrkopf 3 weist eine rotierend angetriebene Kehrwalze 6 auf, die drehbar in einer verdrehweichen Kehrkopfanlenkung 7 gehalten ist und um ein Gelenk 8 schwenkbar an einen Kehrkopfrahmen 9 befestigt ist. An der Kehrkopfanlenkung 7 ist ferner ein Tast- und Tragrad 10 befestigt, das ebenfalls um das Gelenk 8 schwenkbar und über einen Lenker 11 mit dem Kehrkopfrahmen 9 verbunden ist.

Oberhalb der Kehrwalze 6 weist der Kehrkopf 3 ein Saugrohr 12 auf, das zur Kehrwalze 6 offen ausgebildet ist und im wesentlichen vor der Kehrwalze 6 in Richtung auf eine Aufstandsfläche 13 für das Kehrgerät 1 mündet. An das Saugrohr 12 schließt sich ein flexibler Schlauch 14 an, der das Saugrohr 12 mit einem Stutzen 15 eines Gebläsegehäuses 16 verbindet, in dem ein Sauggebläse 17 angeordnet ist. Das Gebläsegehäuse 16 ist ausgangsseitig mit dem Sammelbehälter 5 verbunden. Das Saugrohr 12, der Schlauch 14 und das Gebläsegehäuse 16 bilden den Förderkanal 4, durch den das von der Kehrwalze 6 in die Ansaugöffnung des Saugrohres 12 geworfenes Kehrgut zum Sammelbehälter 5 gefördert wird. Die Förderung des Kehrgutes wird hierbei maßgeblich von den im Gebläsegehäuse 16 angeordneten Sauggebläse 17 durchgeführt. Dieses Sauggebläse 17 erzeugt einen Unterdruck im Förderkanal 4.

Innerhalb des Saugrohres 12 ist ein Leitblech 18 um einen Schwenkpunkt 19 drehbar angeordnet, welches den Querschnitt des Saugrohres 12 in einem Förderkanal 20 und einen Luftnebenkanal 21 unterteilt, wobei der Luftnebenkanal 21 parallel zum Förderkanal 20 verläuft und bei Betrieb des Kehrgerätes 1 im wesentlichen frei von Kehrgut und anderen Verunreinigungen, mit Ausnahme von angesaugtem Staub bleibt. Das Leitblech 18 ist derart um den Schwenkpunkt 19 verschwenkbar im Kehrkopf 3 angeordnet, daß die Eingangsquerschnittsfläche des Saugrohres 12 bzw. des Saugkanals derart einstellbar ist, daß eine Veränderung der Eingangsquerschnittsfläche des Förderkanals 20 eine Veränderung der Eingangsquerschnittsfläche des Luftnebenkanals 21 nach sich zieht. In der Figur 1 sind zwei Stellungen des Leitbleches 18 durch durchgezogene bzw. gestrichelte Linien dargestellt.

Ferner ist an dem Saugrohr 12 im Bereich des Schwenkpunktes 19 ein Schieber 22 angeordnet, mit dem der Querschnitt des Luftnebenkanals 21 ausgangsseitig variierbar ist.

Das in Figur 1 dargestellte Kehrgerät 1 hat darüberhinaus in seinem Frontbereich als Tellerbürsten ausgebildete Seitenbesen 23, die, wie in Figur 2 erkennbar ist, seitlich vor der Kehrwalze 6 angeordnet sind und seitlich neben der Kehrwalze befindliches Kehrgut in den Bereich der Kehrwalze 6 fördern, von wo aus das Kehrgut über den Förderkanal 4 dem Sammelbehälter 5 zugeführt wird. Die Seitenbesen 23 sind über Lenker 24 verschwenkbar an einem Träger 25 angeordnet, der mit dem Kehrkopfrahmen 5 verbunden ist.

Zwischen dem Träger 25 und dem Saugrohr 12 sind Entlastungsfedern 26 vorgesehen, mit denen die Kehrkopfanlenkung 7 zusammen mit der Kehrwalze 6 und dem Tast- und Tragrad 10 relativ zum Kehrkopfrahmen 9 um das Gelenk 8 in Richtung auf die Aufstandsfläche 13 verschwenkt wird. Zum Ausgleich der Verschwenkbewegung, welche durch die Entlastungsfedern 26 hervorgerufen wird, weist der Kehrkopf 3 als Kufen 27 ausgebildete Führungselemente auf, die den Kehrkopf 3 bei Überfahren eines Hindernisses mit der Kraft der Entlastungsfedern 26 anheben und um das Gelenk 8 relativ zum Kehrkopfrahmen 9 verschwenken. Zu diesem Zweck ist der Schlauch 14 des Förderkanals 4 entsprechend in seiner Längsrichtung teleskopierbar ausgebildet, so daß beim Anheben des Kehrkopfes 3 eine Verkürzung des Förderkanals 4 vorgenommen werden kann.

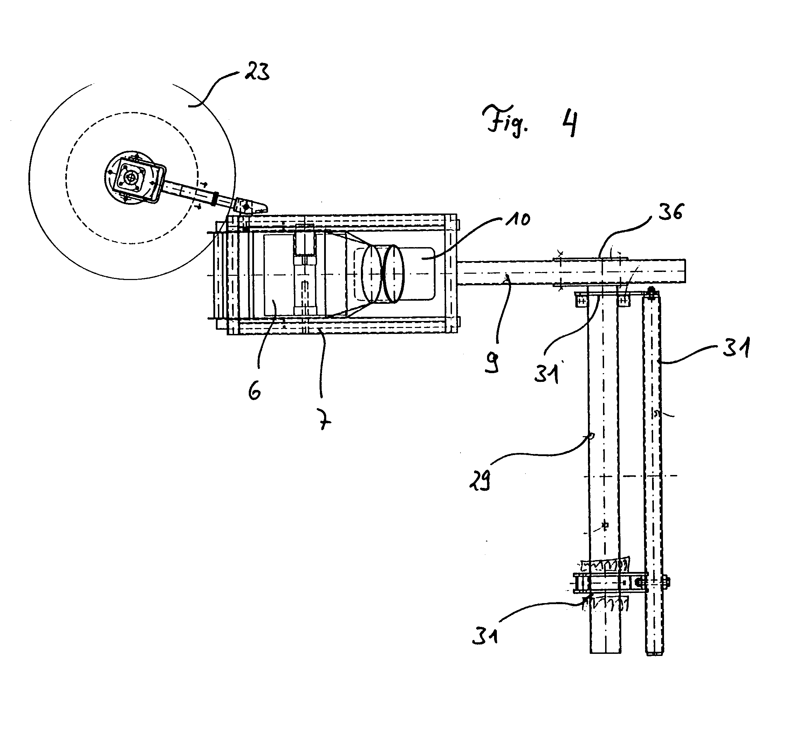

Der Kehrkopfrahmen 9 ist an einer Aufhängung 28, wie sie nachfolgend noch in bezug auf die Figuren 2 bis 4 beschrieben wird, angeordnet.

Diese Anlenkung 28 dient zur lösbaren Befestigung des Kehrgerätes 1 an dem Traktor 2 und weist ein Zentralrohr 29 auf, welches als Schwenkachse ausgebildet ist und in Schwenkhalterungen 30 gelagert ist. Die Schwenkhalterungen 30 sind verdrehfest mit einem Träger 31 verbunden, der Bestandteil des an dem Traktor 2 über Lenker 32 angelenkten Rahmens des Kehrgerätes 1 sind. Das Zentralrohr 29 ist demzufolge relativ zum Träger 31 verdrehbar angeordnet, wobei sowohl der Träger 31 als auch das Zentralrohr 29 im rechten Winkel zur Längsachse des Traktors 2 angeordnet sind.

Der Rahmen, welcher den Träger 31 aufweist, dient als Grundrahmen für den Sammelbehälter 5. An dem Träger 31 sind parallel zur Längsachse des Traktors 2 verlaufende Träger 33 angeschweißt, die an ihren freien Enden Aufnahmen 34 mit im wesentlichen U-förmiger Ausbildung aufweisen, in denen Stütz- oder Nachlaufräder 35 angeordnet sind.

Das Zentralrohr 39 ist drehbar in den Schwenkhalterungen 30 gelagert. Die Drehung erfolgt stufenlos mittels eines Hydraulikantriebs. Darüberhinaus ist das Zentralrohr 29 in seiner Achsrichtung verschiebbar in den Schwenkhalterungen 30 gelagert, so daß das Zentralrohr 29 parallel und relativ zum Träger 31 verschiebbar ist. An seinem dem Kehrkopfrahmen 9 zugewandten Ende trägt das Zentralrohr 29 eine Klemmhalterung 36, in welcher der Kehrkopfrahmen 9 stufenlos in Richtung seiner Längserstreckung verstellbar ist. Durch diese Ausbildung kann das Kehrgerät 1 an verschiedene Spurweiten und Radstände verschiedener Traktoren 2 dadurch angepaßt werden, daß das Zentralrohr 29 in Abhängigkeit der Spurweite bspw. der Hinterräder 37 des Traktors und durch die Verschiebung des Kehrkopfrahmens 3 in der Klemmhalterung an den Radstand zwischen den Hinterrädern 37 und den Vorderrädern 38 des Traktors 2 angepaßt wird. Die Verstellung des Kehrkopfrahmens 9 in der Klemmhalterung 36 erfolgt hierbei mechanisch, wogegen die Verstellung des Zentralrohrs 29 in Richtung seiner Achse hydraulisch erfolgt. Der Grund hierfür liegt darin, daß die Verstellung des Zentralrohres 29 in Richtung seiner Längsachse auch dann notwendig sein kann, wenn das Kehrgerät 1 entsprechend bestimmter Parameter der zu kehrenden Fläche eingestellt werden soll. Beispielsweise erfolgt eine Einstellung des Kehrgerätes 1 hinsichtlich einer für den Traktor 2 nicht befahrbaren Fläche, die vollständig gekehrt werden soll. Demgegenüber ist die Anpassung des Kehrkopfrahmens 9 bezüglich der Klemmhalterung 36 nur bei der Montage des Kehrgerätes 1 an dem Traktor 2 in bezug auf den Radstand notwendig.

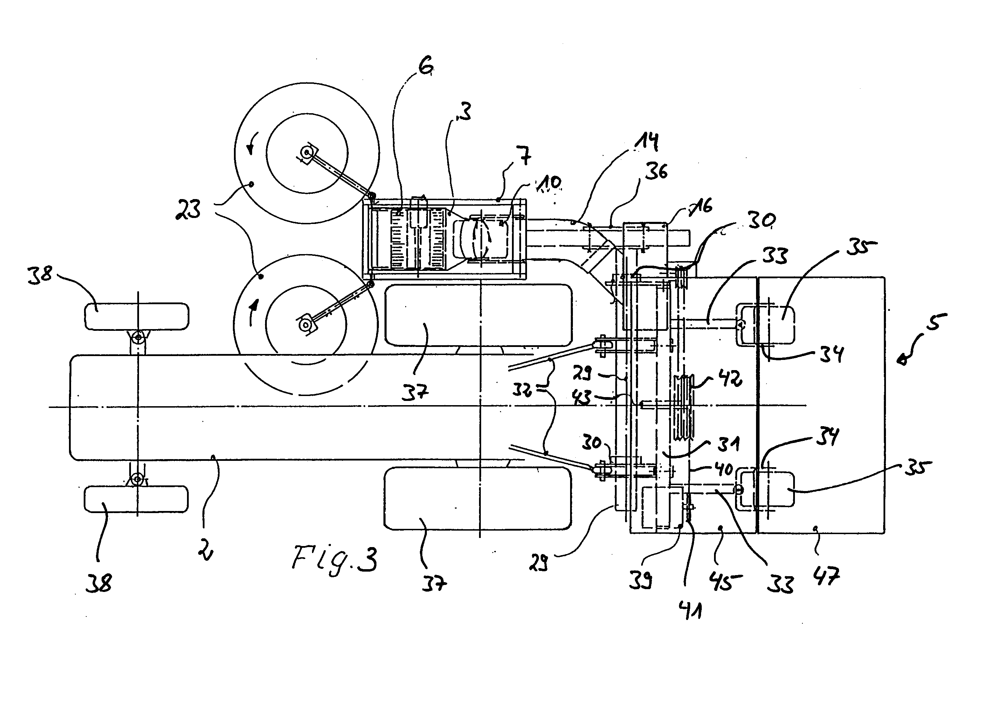

Wie insbesondere aus der Figur 3 zu erkennen ist, erfolgt der Antrieb des für die Verstellung des Zentralrohres 29 notwendigen Hydraulikaggregates 39 über einen Keilriemen 40, der über eine Keilriemenscheibe 41 des Hydraulikaggregats 39 und über eine Keilriemenscheibe 42 läuft, welche zusammen mit weiteren Keilriemenscheiben auf einer Welle 43 drehfest befestigt ist, die mit einer nicht dargestellten Zapfwelle des Traktors 2 verbindbar ist. Weitere Keilriemenscheiben, die auf dieser Welle 43 aufgesetzt sind, sind über Keilriemen 44 mit Keilriemenscheiben verbunden, die auf der Antriebsachse des Gebläses 17 angeordnet sind.

Der Antrieb des Motors der Kehrwalze 6 sowie der Motoren der Seitenbesen 23 erfolgt hydraulisch, wobei das Hydraulikaggregat 39 als Hydraulikpumpe ausgebildet ist, welche ein Fluidstrom über nicht dargestellte Leitungen zu den Motoren der Kehrwalze 6 und der Seitenbesen 23 fördert. Es sei an dieser Stelle erwähnt, daß die Seitenbesen 23 schwenkbar am Träger 25 befestigt sind, so daß die Breite der mit dem Kehrgerät 1 zu kehrenden Fläche in begrenztem Maße einstellbar ist.

Das Stütz- oder Nachlaufrad 35 kann gegenüber dem Rahmen nach unten auf Druck beaufschlagt werden. Dies erfolgt bspw. hydraulisch, so daß sich der Rahmen mit Kehrwalze 6 und den Seitenbesen 23 abhebt, um Unebenheiten, bspw. Bordsteine oder dgl. zu überfahren. In dieser Stellung wird aber auch eine Transportstellung eingenommen, wie sie auch durch Verdrehen des Zentralrohres 29 in den Schwenkhalterungen 30 ermöglicht wird. Eine weitere Anpassungsfähigkeit für die Kehrwalze 6 ist durch die schwimmende Aufhängung an dem Kehrkopfrahmen 9 gegeben, die aus entsprechenden Lenkern mit hinterem Drehpunkt, den Kufen 27 und den Entlastungsfedern 26 gebildet ist, die die Bürste nach oben anheben. Der Kehrkopfrahmen 9 sitzt zu diesem Zwecke selbst an dem Tast- und Tragrad 10, so daß er in einfacher Weise an Bodenverhältnisse anpassbar geführt ist und sich insoweit selbst trägt. Die Achse dieses Tast- und Tragrades 10 liegt etwa in derselben Vertikalebene, wie die Achse der Stütz- oder Nachlaufräder 35. Hierdurch ist die Verwendung eines nicht gelenkten Tast- oder Tragrades 10 möglich.

Nachfolgend wird der in Figur 1 dargestellte Sammelbehälter 5 detailliert beschrieben.

Der Sammelbehälter 5 besteht aus einem Behälterteil 45 und einem daran schwenkbeweglich über eine Schwenkachse 46 angelenkten, den Behälterteil 45 verschließenden Fallenteil 47, wobei Behälterteil 45 und Fallenteil 47 jeweils ein unter einem Winkel zur Aufstandsfläche 13 verlaufendes Bodenblech 48 bzw. 49 aufweisen, das bei geöffnetem Fallenteil 47 ein problemloses Herausrutschen des in den Sammelbehälter 5 angesammelten Kehrgutes ermöglicht.

Der Behälterteil 45 des Sammelbehälters 5 weist einen Eingangsstutzen 50 auf, der an dem Ausgangsstutzen des Gebläsegehäuses 16 angeschlossen ist. Oberhalb des Eingangsstutzens 50 ist ein erstes herausnehmbares Prallblech 51 angeordnet, daß das in Richtung des Pfeils 52 in den Sammelbehälter 5 einströmende Kehrgut in Richtung auf den Fallenteil 47 leitet.

Ferner weist der Behälterteil 45 in seinem oberen Abschlußblech ein Lochblech 53 auf, welches oberhalb des Prallblechs 51 angeordnet und von diesem fast vollständig abgedeckt ist, wobei zwischen dem Prallblech 51 und dem Lochblech 53 ein Abstand besteht. Das Lochblech 53 ist außenseitig des Sammelbehälters 5 mit einem verschwenkbar an der Außenseite des Sammelbehälters 5 befestigten Leitblech 54 verschließbar.

Der Fallenteil 47 weist in seinem oberen Teil eine Öffnung auf, in die eine Filtereinrichtung 55 einsetzbar ist. Diese Filtereinrichtung 55 besteht aus einem Filterplattenrahmen mit einer Vielzahl von sogenannten Filterplatten 56, die in Form einer Doppelplatte ausgebildet sind und die Öffnung im Fallenteil 47 derart abdecken, daß die in den Sammelbehälter 5 einströmende Luft nur über die Filtereinrichtung 55 aus dem Fallenteil 47 entweichen kann.

Im Bereich der Filtereinrichtung 55 ist innerhalb des Fallenteils 47 eine schwenkbare Lochwand 57 angeordnet. Diese Lochwand kann entweder parallel zu der Trennfuge zwischen Behälterteil 45 und Fallenteil 47, d.h. lotrecht angeordnet sein, oder bei herausgenommener Filtereinrichtung 55 die Öffnung für die Filtereinrichtung 55 verschließen.

Oberhalb der Öffnung für die Filtereinrichtung 55 weist der Fallenteil 47 eine als Regenabdeckung dienende Platte 58 auf, die ebenfalls schwenkbar befestigt sein kann. Schließlich ist in dem Fallenteil 47 ein zweites herausnehmbares Prallblech 59 derart angeordnet, daß es das in Richtung des Falz 52 einströmende und von dem ersten Prallblech 51 umgelenkte Kehrgut in Richtung auf eine Entleerungseinrichtung zwischen Behälterteil 45 und Fallenteil 47 leitet. Das Prallblech 59 ist unterhalb der Filtereinrichtung 55 angeordnet.

Die Filterplatten 56 können mit einer Rütteleinrichtung 60 versehen sein, die elektrisch oder hydraulisch betätigt werden kann, ggfs. ist auch eine Betätigung von Hand denkbar, bei deren Betätigung außerhalb der Betriebsphasen der Staub von den Außenflächen der Filterplatten 56 abgeschüttelt wird und in den unteren Teil des Sammelbehälters fällt.

Die verschiedenen Betriebsweisen des voranstehend beschriebenen Sammelbehälters 5 werden nachfolgend erläutert.

Bei Einsatz des Kehrgerätes 1, bei welchem trockene staubhaltige Luft über den Förderkanal 4 angesaugt wird, ist das schwenkbare Leitblech 54 über dem Lochblech 53 angeordnet, so daß das Lochblech 53 gegenüber der Umgebung des Sammelbehälters 5 abgedichtet ist. Das angesaugte staubförmige Kehrgut gelangt über den Förderkanal 4 und das Sauggebläse 17 in den Behälterteil 45 und anschließend in den Bereich des Fallenteils 47, in dem die Filtereinrichtung 55 angeordnet ist. Die in Lufteinströmrichtung vor der Filtereinrichtung 55 angeordnete Lochwand 57 dient bei dieser Betriebsweise dazu, gröbere Schmutzstücke, Gras usw. nicht in den Bereich der Filtereinrichtung 55 gelangen zu lassen. Für gröbere Steine usw. ist das im unteren Bereich des Fallenteils 47 angeordnete Prallblech 59 in den Sammelbehälter 5 eingesetzt.

Bei einer weiteren Betriebsweise, bei der feuchte staubhaltige Luft angesaugt wird, ist das schwenkbare Leitblech 54 aufgeklappt, so daß das darunter befindliche Lochblech 53 als Grobsieb dient. Steine und gröbere Partikel bleiben damit ohnehin im Sammelbehälter 5, ansonsten tritt die feuchte staubhaltige Luft praktisch vollständig durch das Lochblech 53 unterhalb des aufgeklappten Leitblechs 54 aus, so daß die Filterplatten 56 nicht mit feuchter Luft beaufschlagt werden. Um den Stauwiderstand vor den Filterplatten 56 zu erhöhen, kann man deren Ausgänge verschließen. Im übrigen sind diese Ausgänge von der regenabweisenden Platte 58 überdeckt, wie dies in Figur 1 dargestellt ist. Es ist vorgesehen, daß diese Platte 58 so ausgestaltet ist, daß sie zum Verschließen der Luftöffnungen im Bereich der Filtereinrichtung 55 dienen kann. Beispielsweise ist dies dadurch erreichbar, daß die Platte 58 in einfacher Weise zwischen einer geöffneten Stellung und einer geschlossenen Stellung verschwenkbar ist. Eine weitere Ausgestaltung ist darin zu sehen, daß das schwenkbare Leitblech 54 wahlweise über dem Lochblech 53 oder über der Öffnung für die Filtereinrichtung 55 angeordnet werden kann. Insoweit verschließt das Leitblech 54 entweder das Lochblech 53 des Behälterteils 45 oder aber die Ausgänge der Filtereinrichtung 55 im Fallenteil 47. Selbstverständlich ist es auch möglich, eine derartige Verschlußeinrichtung als Schieber auszubilden, der wahlweise über das Lochblech 53 oder die Ausgänge der Filtereinrichtung 55 verfahrbar ist.

Bei einer weiteren Betriebsweise, bei der trokkenes oder nasses Gras oder Laub angesaugt wird, sind die Filterplatten 56 der Filtereinrichtung 55 sämtlich aus dem Fallenteil 47 des Sammelbehälters 5 herausgenommen und die schwenkbare Lochwand 57 derart noch oben verschwenkt, daß die Öffnung für die Filtereinrichtung 55 durch die Lochwand 57 abgedeckt ist, so daß sie ähnlich wie das vordere Lochblech 53 als Grobfilter dient. Das vordere Leitblech 54 bleibt im Schließzustand, d.h. deckt das Lochblech 53 ab. Dieses vordere Leitblech 54 hat bei dieser Betriebsweise demzufolge die Aufgabe einer Füllstands- bzw. Verstopfungsanzeige, je nach dem, wie sich die Luftdruckverhältnisse in Abhängigkeit der Füllung des Behälters und/oder bei Verstopfungen einstellen. Damit kann dieser Sammelbehälter 5 aufgrund seiner Umrüstbarkeit nicht nur an einem Kehrgerät 1 sondern in anderer Anwendung auch an einem Zwischenachsmäher oder dgl. angeschlossen werden.

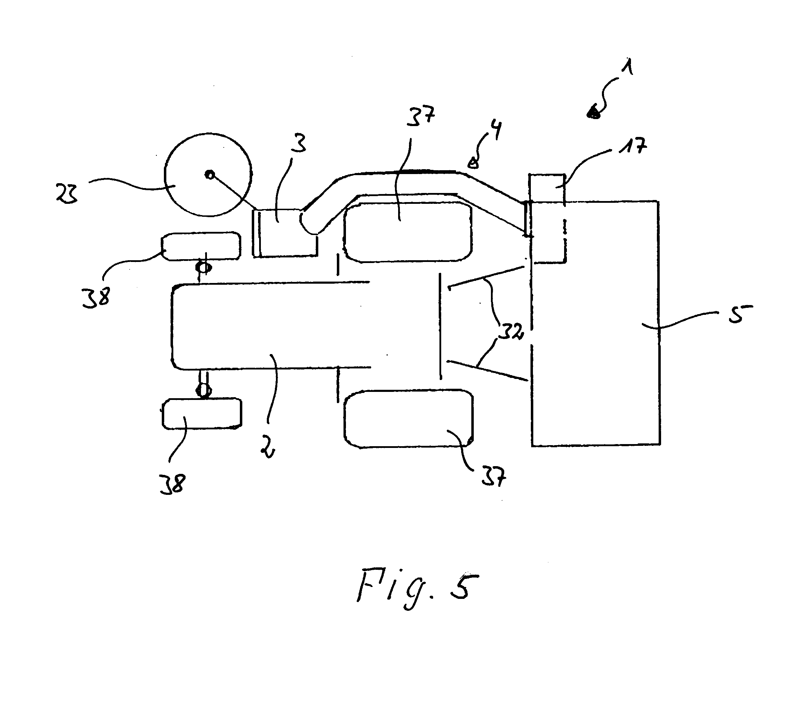

Bezugnehmend auf die Figuren 5 bis 8 zeigt die Figur 5 ein Kehrgerät 1 als Anbauaggregat eines Kleintraktors, mit einem Sammelbehälter 5, der als Huckepackgerät ausgebildet ist. Im Bereich des Sammelbehälters 5 ist das Saugebläse 17 angeordnet, welches über einen Förderkanal 4 mit einem Kehrkopf 3 verbunden ist, welcher seitlich am Traktor 2 zwischen einem Hinterrad 37 und einem Vorderrad 38 angeordnet ist. Der Kehrkopf 3 weist darüberhinaus einen Seitenbesen 23 auf, der um einen Drehpunkt relativ zum Kehrkopf 3 verschwenkbar angeordnet ist.

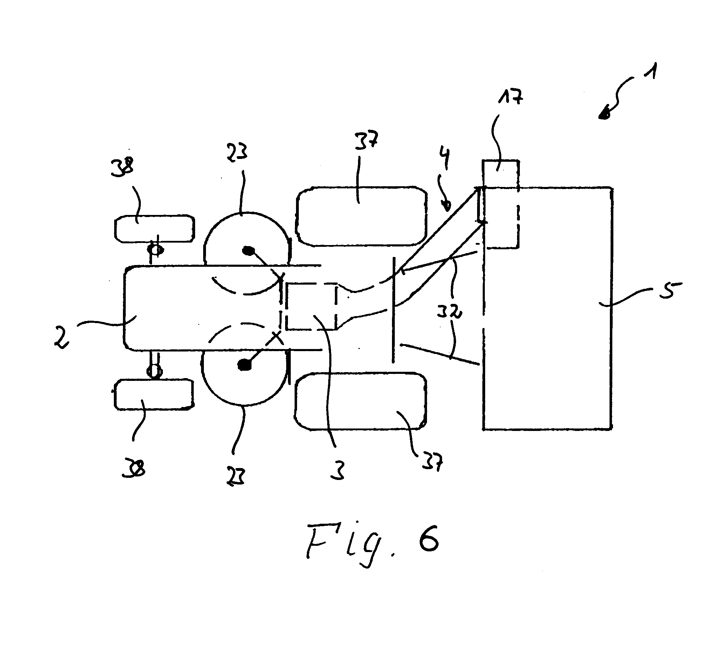

Eine weitere Ausführungsform des Kehrgeräts 1 ist in Figur 6 dargestellt. Wiederum ist an einem Traktor 2 im Heckbereich ein als Huckepackgerät ausgebildeter Sammelbehälter 5 angeordnet, der über ein Sauggebläse 17, einen Förderkanal 4 mit einem Kehrkopf 3 verbunden ist. Der Kehrkopf 3 weist zwei jeweils zwischen einem Hinterrad 37 und einem Vorderrad 38 angeordnete Seitenbesen auf, die wiederum relativ zum Kehrgerät 3 verschwenkbar angeordnet sind. Bei diesem Ausführungsbeispiel des Kehrgerätes 1 ist jedoch der Kehrkopf 3 unterhalb des Traktors 2, vorzugsweise im Bereich der Hinterachse angeordnet.

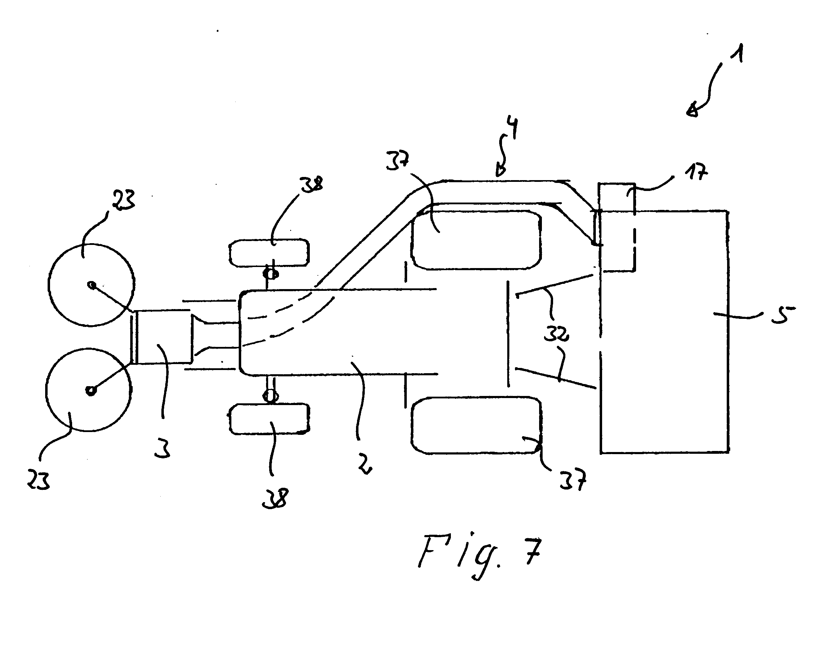

Ein weiteres Ausführungsbeispiel des Kehrgeräts 1 ist in Figur 7 dargestellt, wobei diesmal das Kehrgerät 3 im Frontbereich des Traktors 2 angeordnet und wiederum über einen Förderkanal 4 und Sauggebläse 17 mit einem als Huckepackgerät ausgebildeten Sammelbehälter 5 verbunden ist. Auch dieses Ausführungsbeispiel des Kehrgerätes 1 weist zwei relativ zum Kehrkopf 3 verschwenkbare Seitenbesen 23 auf.

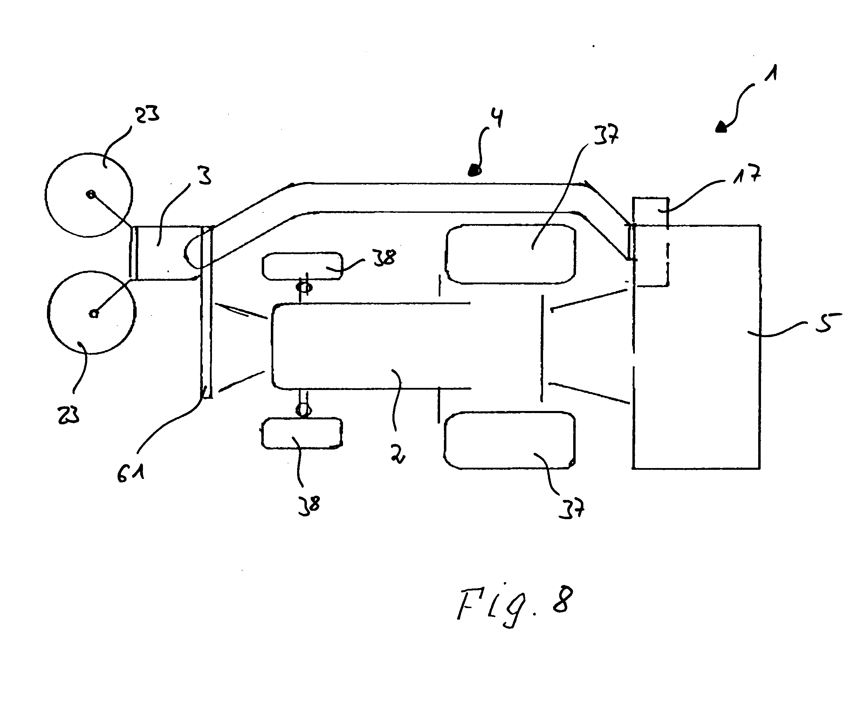

Schließlich ist in Figur 8 eine Weiterbildung des in Figur 7 dargestellten Kehrgerätes 1 gezeigt. Die vorteilhafte Weiterbildung des Kehrgerätes 1 besteht darin, daß der Kehrkopf 3 mit den Seitenbesen 23 entlang einer im Frontbereich des Traktors 2 über Lenker angeordnete Schiene 61 verschiebbar ist. Ansonsten stimmt dieses Ausführungsbeispiel des Kehrgerätes 1 mit dem Ausführungsbeispiel gemäß Figur 7 überein.

Die dargestellte Erfindung ist nicht auf die beschriebenen Ausführungsbeispiele beschränkt. Vielmehr sind Abwandlungen möglich, ohne den Schutzbereich der Erfindung zu verlassen. Beispielsweise kann der Sammelbehälter 5 als nachlaufender Anhänger, insbesondere mit Schwenkrädern ausgebildet sein, der demzufolge starr mit dem Traktor 2 verbunden ist. Der Sammelbehälter 5 kann darüberhinaus eine sogenannte Hochentleerung aufweisen. Schließlich sei an dieser Stelle darauf hingewiesen, daß die Anordnung des Kehrkopfes seitlich zwischen einem Hinter- und einem Vorderrad eines Traktors insbesondere den Vorteil hat, daß sie eine sehr kurze Schlauchführung im Bereich des Förderkanals 4 ermöglicht. Darüberhinaus ist es bei der seitlichen Anordnung des Kehrkopfes 3 von besonderem Vorteil, daß diese Anordnung in besonders einfacher Weise an einem Traktor 2 befestigbar ist und darüberhinaus eine vereinfachte Wartung zuläßt. Schließlich ist die seitlich versetzte Anordnung des Kehrkopfes 3 im Frontbereich des Traktors 2 möglich.

## Patentansprüche

1. Kehrgerät, vorzugsweise als Anbauaggregat für Fahrzeuge, insbesondere Schlepper, Traktoren oder dgl., mit zumindest einer rotierend angetriebenen Kehrwalze, welche aufgenommenes Kehrgut, bspw. feuchtes Laub, Gräser, bzw. sonstige Pflanzenteile oder andere Verunreinigungen in einen Förderkanal fördert, der an seinem der Kehrwalze gegenüberliegenden Ende mit einer Aufnahmevorrichtung, vorzugsweise einem Sammelbehälter verbunden ist, mit einem Gebläse, welches einen Unterdruck im Förderkanal erzeugt, um das von der Kehrwalze in den Förderkanal geförderte Kehrgut anzusaugen und in die Aufnahmevorrichtung zu fördern,
dadurch gekennzeichnet,
daß der Förderkanal (4) zumindest in seinem im Bereich eines der Kehrwalze (6) aufweisenden Kehrkopfes (3) angeordneten Abschnitt einen im wesentlichen parallel verlaufenden Luftnebenkanal (21) hat, über den mittels des Gebläses (17) Luft ansaugbar ist, die im wesentlichen frei von Kehrgut und anderen Verunreinigungen ist.

2. Kehrgerät nach Anspruch 1,
dadurch gekennzeichnet,
daß die Trennung des Förderkanals (4) im Bereich des Kehrkopfes (3) in einen Saugkanal (20) und den Luftnebenkanal (21) durch ein Leitblech (18) ausgebildet ist.

3. Kehrgerät nach Anspruch 2,
dadurch gekennzeichnet,
daß das Leitblech (18) verschwenkbar im Kehrkopf (3) angeordnet ist, so daß die Eingangsquerschnittsfläche des Saugkanals (20) einstellbar ist.

4. Kehrgerät nach Anspruch 3,
dadurch gekennzeichnet,
daß durch die Veränderung der Eingangsquerschnittsfläche des Saugkanals (20) eine Veränderung der Eingangsquerschnittsfläche des Luftnebenkanals (21) erfolgt.

5. Kehrgerät nach Anspruch 1,
dadurch gekennzeichnet,
der Querschnitt des Luftnebenkanals (21) zumindest ausgangsseitig im Bereich des Übergangs in den Förderkanal (4) einstellbar ist.

6. Kehrgerät nach Anspruch 5,
dadurch gekennzeichnet,
daß der Querschnitt des Luftnebenkanals (21) mit einem Schieber (22) oder dgl. variierbar ist.

7. Kehrgerät nach Anspruch 1,
dadurch gekennzeichnet,
daß der Luftnebenkanal (21) in Fahrtrichtung bei Arbeitsstellung vor der Kehrwalze (6) mündet.

8. Kehrgerät nach Anspruch 1,
dadurch gekennzeichnet,
daß vor der Kehrwalze (6) zumindest ein Seitenbesen (23) angeordnet ist und daß der Luftnebenkanal (21) zwischen Kehrwalze (6) und Drehachse des Seitenbesens (23) mündet.

9. Kehrgerät nach Anspruch 1,
dadurch gekennzeichnet, daß das Gebläse (17) zwischen Kehrkopf (3) und Aufnahmevorrichtung (5) angeordnet ist.

10. Kehrgerät nach Anspruch 9,
dadurch gekennzeichnet,
daß dem Gebläse (17) Filter nach- und der Aufnahmevorrichtung (5) vorgeschaltet sind.
